# EUROPEAN PATENT SPECIFICATION

(11) **EP 4 043 847 B1**
(45) Date of publication and mention of the grant of the patent: **25.06.2025**
(21) Application number: 21804300.8
(22) Date of filing: 12.05.2021
(51) Int. Cl.: H05B 6/06, G01K 7/36, G01K 7/16

(54) **HEATING TEMPERATURE MEASUREMENT CIRCUIT AND TEMPERATURE MEASUREMENT METHOD THEREFOR, AND COOKING APPARATUS AND STORAGE MEDIUM**
HEIZTEMPERATURMESSSCHALTUNG UND TEMPERATURMESSVERFAHREN DAFÜR SOWIE KOCHGERÄT UND SPEICHERMEDIUM
CIRCUIT DE MESURE DE TEMPÉRATURE DE CHAUFFAGE ET PROCÉDÉ DE MESURE DE TEMPÉRATURE ASSOCIÉ, AINSI QU'APPAREIL DE CUISSON ET SUPPORT DE STOCKAGE

(30) Priority: 12.05.2020 CN 202010399049
(43) Date of publication of application: 17.08.2022
(73) Proprietor: Foshan Shunde Midea Electrical Heating Appliances Manufacturing Co., Ltd., Foshan, Guangdong 528311 (CN)
(72) Inventor: JIANG, Deyong, Foshan, Guangdong 528311 (CN); ZHENG, Liang, Foshan, Guangdong 528311 (CN); MA, Zhihai, Foshan, Guangdong 528311 (CN); HUANG, Shufeng, Foshan, Guangdong 528311 (CN); WANG, Yunfeng, Foshan, Guangdong 528311 (CN); LEI, Jun, Foshan, Guangdong 528311 (CN)
(74) Representative: Whitlock, Holly Elizabeth Ann
(86) International application number: PCT/CN2021/093221
(87) International publication number: WO 2021/228115

(56) References cited:
- CN-A- 1 900 602
- CN-A- 101 307 924
- CN-A- 106 092 369
- CN-A- 107 013 955
- CN-A- 110 631 058
- CN-U- 202 261 883
- CN-U- 210 014 402
- CN-Y- 201 014 595
- DE-A1- 10 337 543
- US-A1- 2011 120 989

## Description

### TECHNICAL FIELD

The present disclosure relates to the technical field of temperature detection, and in particular to a heating and temperature-measuring circuit, a temperature measurement method, a cooking apparatus and a non-transitory storage medium.

### BACKGROUND

In the related art, when a metal object is heated, it is necessary to detect and control a temperature of the metal object. Taking a cooking apparatus as an example, in order to better control the cooking apparatus to heat the metal object, the temperature of the metal object is required to be measured. For example, when the metal object is heated according to a set heating curve, it is necessary to detect whether the temperature of the metal object meets the set heating curve. For another example, when the temperature of the metal object is abnormal, the cooking apparatus may be stopped heating the metal object.

An existing method is to detect the temperature of the metal object with a thermistor. However, due to a problem of setting a location of the thermistor, the temperature detection is inaccurate, and a detection for a temperature jump at a local position of the metal object is also not sensitive enough. US2011120989A1 relates generally to a method for determining a temperature of a cooking vessel base, which prevents the interference that is produced by a plurality of resonant circuits in the induction heating device. CN210014402U relates generally to a control circuit for an electromagnetic heater, wherein a constant DC power supply can assist the DC measurement power supply to prevent inaccurate temperature measurement caused by insufficient output capacity of the DC measurement power supply.

### SUMMARY OF THE DISCLOSURE

Aspects of the invention are set out in the claims. In order to solve the above problems, a heating and temperature-measuring circuit, a temperature measurement method, a cooking apparatus and a non-transitory storage medium are provided in the present disclosure, and an accuracy of a temperature measurement may be improved.

According to a technical solution adopted in the present disclosure, a temperature measurement method based on a heating and temperature-measuring circuit is provided. The heating and temperature-measuring circuit is configured to heat a metal object via a heating coil by inputting an alternating-current voltage to the heating coil, and a heating process includes a plurality of heating periods. The method includes determining an operating mode of a heating device; and determining a temperature measurement interval based on the operating mode and performing a temperature measurement in the temperature measurement interval, wherein a heating power of a heating period prior to the temperature measurement interval is less than a set power value.

According to the invention, an operation of the determining a temperature measurement interval based on the operating mode and performing a temperature measurement in the temperature measurement interval includes in response to the operating mode being a standby mode or a calibration mode, determining the temperature measurement interval based on the standby mode or the calibration mode and performing the temperature measurement in the temperature measurement interval; and in response to the operating mode being a heating mode, determining a heating type, determining the temperature measurement interval based on the heating type, and performing the temperature measurement in the temperature measurement interval.

According to the invention, an operation of the determining the temperature measurement interval based on the standby mode or the calibration mode and performing the temperature measurement includes initiating at least one of the heating periods; and performing the temperature measurement at or at a moment near an end of the at least one of the heating periods. The moment near the end of the at least one of the heating periods is a set time point prior to the end of the at least one of the heating periods.

In some embodiments, the heating coil is connected to a switch circuit, and the switch circuit is controlled by a driving pulse signal to be on or off. PPG1<PPG3. PPG1 is a pulse width value of the driving pulse signal of the heating period, and PPG3 is a pulse width value of the driving pulse signal of the temperature measurement interval.

According to the invention, an operation of the determining the temperature measurement interval based on the heating type and performing the temperature measurement in the temperature measurement interval, includes in response to the heating type being a type of heating in a high power, reducing the heating power of at least one of the plurality of the heating periods, performing heating in a low power in the at least one of the plurality of the heating periods, and performing the temperature measurement at a moment near an end of any one of target heating periods of the plurality of the heating periods. The high power is greater than the set power value, the low power is less than the set power value, and the moment near the end of the any one of the target heating periods is a set time point prior to the end of the any one of the target heating periods.

In some embodiments, an operation of the reducing the heating power of at least one of the plurality of the heating periods, performing heating in a low power in the at least one of the plurality of the heating periods, and performing the temperature measurement at a moment near an end of any one of target heating periods of the plurality of the heating periods, includes taking a last one of a preset number of consecutive heating periods as a target heating period; reducing a heating power of the target heating period; and performing the temperature measurement at a moment near an end of the target heating period.

In some embodiments, the heating coil is connected to a switch circuit, and the switch circuit is controlled by a driving pulse signal to be on or off. PPG2<PPG1<PPG3 PPG1 is a pulse width value of the driving pulse signal of a heating period in the high power, PPG2 is a pulse width value of the driving pulse signal of a heating period in the low power, and PPG3 is a pulse width value of the driving pulse signal of the temperature measurement interval.

In some embodiments, PPG2≤0.8*PPG1.

According to the invention, an operation of the determining the temperature measurement interval based on the heating type and performing the temperature measurement in the temperature measurement interval, includes in response to the heating type being a type of heating in a low power, performing the temperature measurement at a moment near an end of a last one of a preset number of the heating periods. The low power is less than the set power value, and the moment near the end of the last one of the preset number of the heating periods is a set time point prior to the end of the last one of the preset number of the heating periods.

In some embodiments, the heating coil is connected to a switch circuit, and the switch circuit is controlled by a driving pulse signal to be on or off. PPG1<PPG3. PPG1 is a pulse width value of the driving pulse signal of the heating period, and PPG3 is a pulse width value of the driving pulse signal of the temperature measurement interval.

In some embodiments, the preset number of the heating periods include at least one of the heating periods.

In some embodiments, the heating type is power regulation heating, an entire interval of the power regulation heating includes a heating interval and a heating-stopped interval, and the heating interval includes at least one heating period. An operation of the determining the temperature measurement interval based on the heating type and performing the temperature measurement in the temperature measurement interval includes performing the temperature measurement at a moment near an end of a last one of the heating periods in the heating interval, in response to the heating type being a type of power regulation heating. The moment near the end of the last one of the heating periods in the heating interval is a set time point prior to the end of the last one of the heating periods in the heating interval.

In some embodiments, the heating coil is connected to a switch circuit, and the switch circuit is controlled by a driving pulse signal to be on or off. PPG1<PPG3. PPG1 is a pulse width value of the driving pulse signal of the heating period, and PPG3 is a pulse width value of the driving pulse signal of the temperature measurement interval.

In some embodiments, the set power value is 1400W.

According to another technical solution adopted in the present disclosure, a heating and temperature-measuring circuit is provided and includes a heating circuit, a temperature-measuring circuit, a switch circuit connected to the heating circuit and the temperature-measuring circuit, and a control circuit connected to the switch circuit and configured to output a driving pulse signal, and the driving pulse signal is configured to control the switch circuit to be on or off, to implement the above method.

According to a further technical solution adopted in the present disclosure, a cooking apparatus is provided and includes the above heating and temperature-measuring circuit.

According to still a further technical solution adopted in the present disclosure, a non-transitory computer-readable storage medium is provided and configured to store program data, and when the program data is executed by a controller, the controller is caused to perform the above method.

A temperature measurement method based on a heating and temperature-measuring circuit provided in some embodiments of the present disclosure includes determining an operating mode of a heating device; and determining a temperature measurement interval based on the operating mode and performing a temperature measurement in the temperature measurement interval. A heating power of a heating period prior to the temperature measurement interval is less than a set power value. In this way, different temperature measurement intervals may be determined under different operating modes, such that at least the heating power before the temperature measurement may be lower, a problem that a temperature measurement result may be affected by a specific heat capacity resulting from a local temperature of the metal object which is heated being over high may not exist, and the accuracy of the temperature measurement may be improved.

### BRIEF DESCRIPTION OF THE DRAWINGS

FIG. 1 is a structural schematic view of a cooking apparatus according to an embodiment of the present disclosure.
FIG. 2 is a circuit schematic view of a heating circuit according to an embodiment of the present disclosure.
FIG. 3 shows a waveform diagram of an input power supply in FIG. 2, a waveform diagram of a point A in FIG. 2, and a waveform diagram of a point B in FIG. 2.
FIG. 4 is a schematic circuit diagram of a heating and temperature-measuring circuit according to an embodiment of the present disclosure.
FIG. 5 is a schematic circuit diagram of a temperature-measuring circuit according to a first embodiment of the present disclosure.
FIG. 6 is a schematic circuit diagram of the temperature-measuring circuit according to a second embodiment of the present disclosure.
FIG. 7 shows an equivalent circuit diagram of an excitation coil, an equivalent circuit diagram of a receiving coil, and an equivalent circuit diagram of a metal object according to some embodiments of the present disclosure.
FIG. 8 is a schematic flowchart of a temperature measurement method based on the heating and temperature-measuring circuit according to an embodiment of the present disclosure.
FIG. 9 is a waveform diagram in a standby mode or a calibration mode.
FIG. 10 is a waveform diagram of heating in a high power.
FIG. 11 is a waveform diagram of heating in a low power.
FIG. 12 is a waveform diagram of power regulation heating.
FIG. 13 is a schematic flowchart of a multi-mode determining process according to some embodiments of the present disclosure.
FIG. 14 is a module schematic diagram of the heating and temperature-measuring circuit according to some embodiments of the present disclosure.
FIG. 15 is a structural schematic diagram of a non-transitory computer-readable storage medium according to an embodiment of the present disclosure.

### DETAILED DESCRIPTION

The terms "first", "second", etc. in the present disclosure are used to distinguish different objects, rather than to describe a specific order. Furthermore, the terms "comprising", "including", "having", "with" and any variations thereof are intended to cover non-exclusive inclusions. For example, a process, a method, a system, a product, or a device including a series of operations or units are not limited to listed operations or units, but may also include unlisted operations or units, or may also include other operations or units inherent to the process, the method, the product, or the device.

The term "embodiment" mentioned herein means that a specific feature, a specific structure, or a specific characteristic described in connection with the embodiment may be included in at least one of the embodiments of the present disclosure. Appearances of the term at various positions of the specification may be not necessarily to indicate the same embodiment, or separate or alternative embodiments mutually exclusive to other embodiments. It is explicitly and implicitly understood by those skilled in the art that the embodiments described herein may be combined with other embodiments.

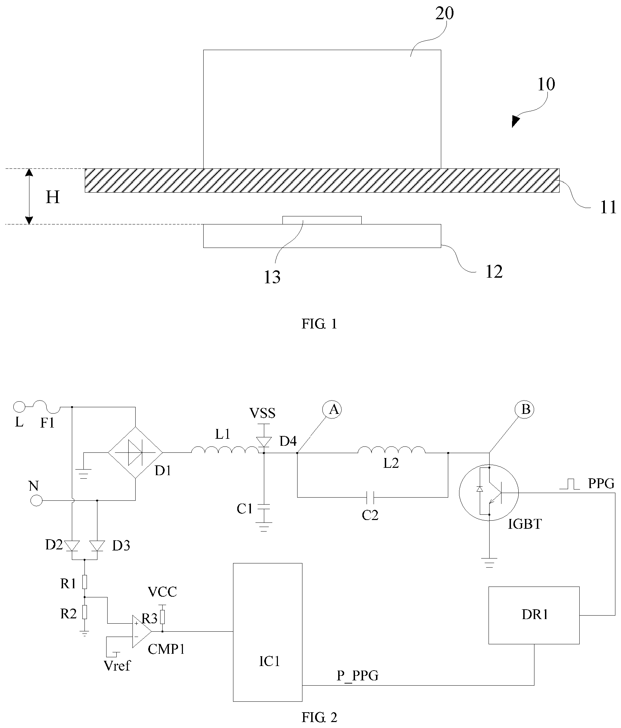

As shown in FIG. 1, FIG. 1 is a structural schematic view of a cooking apparatus according to an embodiment of the present disclosure. The cooking apparatus 10 includes a panel 11, a heating coil 12, an excitation coil (not shown in FIG. 1), and a receiving coil 13.

The panel 11 includes a first side surface and a second side surface. The first side surface is a heating surface for placing a metal object 20. The heating coil 12, the excitation coil (not shown in FIG. 1), and the receiving coil 13 are arranged on the second side surface. In some embodiments, the panel 11 is made of a non-metallic material. The heating coil 12, the excitation coil (not shown in FIG. 1), and the receiving coil 13 are in an indirect contact with the panel 11.

In some embodiments, the heating coil 12 may generate an alternating magnetic field when the heating coil 12 is energized. An eddy current may be generated by the metal object 20 under the alternating magnetic field, such that the heating coil 12 may heat the metal object 20 (for example, a cooker).

When the temperature of the metal object 20 is measured, an excitation signal is provided to the excitation coil, such that the metal object 20 may generate the eddy current. The eddy current may further allow the receiving coil to generate a receiving signal. A measured temperature of the metal object 20 may be determined based on the excitation signal and the receiving signal.

As shown in FIG. 2, FIG. 2 is a circuit schematic view of a heating circuit according to an embodiment of the present disclosure. The heating circuit may include a power input terminal L/N, a fuse F1, a rectifier bridge D1, a zero-crossing circuit (including a diode D2, a diode D3, a resistor R1, a resistor R2, a resistor R3, and a comparator CMP1), a choke coil L1, a filter capacitor C1, a resonant capacitor C2, a resonant inductor L2 (the heating coil), a power tube IGBT, a drive module DR1 for the IGBT, a control chip IC1, an excitation power supply VSS, and a diode D4, etc.

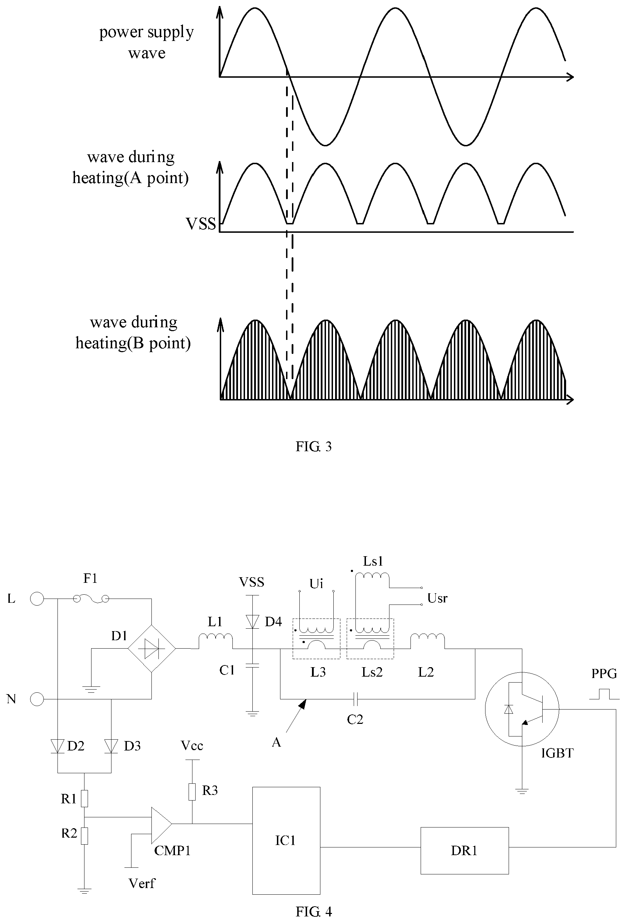

In conjunction with FIG. 3, FIG. 3 shows a waveform diagram of an input power supply in FIG. 2, a waveform diagram of a point A in FIG. 2, and a waveform diagram of a point B in FIG. 2. A shaded portion in the waveform diagram of the point B represents a plurality of resonance-voltage waveforms.

In some embodiments, the drive module DR1 for the IGBT may output a PPG (photoplethysmograph) signal, which is configured to drive the power tube IGBT to be turned off at a high frequency.

In an embodiment, the heating circuit and the temperature-measuring circuit may be achieved by the same circuit. As shown in FIG. 4, FIG. 4 is a schematic circuit diagram of a heating and temperature-measuring circuit according to an embodiment of the present disclosure. The heating and temperature-measuring circuit may include the power input terminal L/N, the fuse F1, the rectifier bridge D1, the choke coil L1, the filter capacitor C1, the resonant capacitor C2, the resonant inductor L2 (the heating coil), the power tube IGBT, the excitation power supply VSS, the diode D4, a current transformer L3, and the excitation coil (not shown in FIG. 4). The excitation coil may be set separately, or be connected to the heating coil in parallel such that a coil disk may be assembled by the excitation coil and the heating coil.

In some embodiments, the heating and temperature-measuring circuit may also include the zero-crossing circuit (including the diode D2, the diode D3, the resistor R1, the resistor R2, the resistor R3, and the comparator CMP1), the drive module DR1 for the IGBT, and the control chip IC1.

In another embodiment, a temperature-measuring circuit may be set separately.

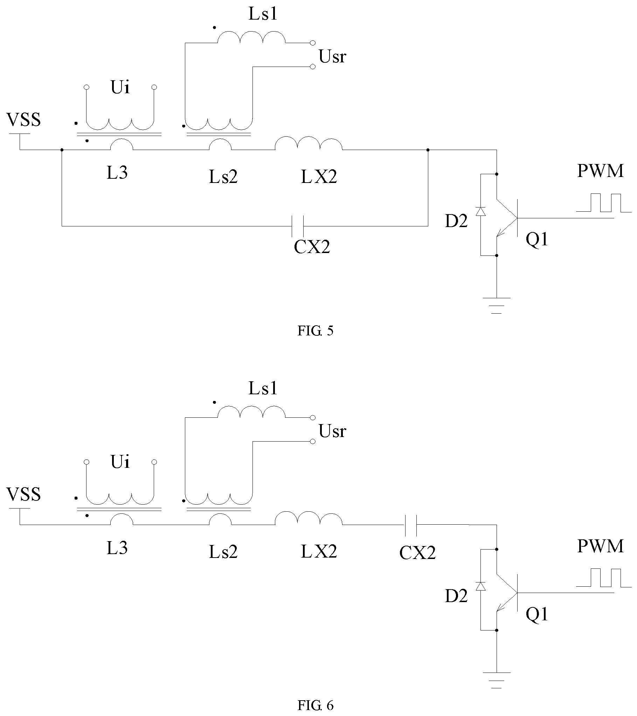

As shown in FIG. 5, FIG. 5 is a schematic circuit diagram of a temperature-measuring circuit according to a first embodiment of the present disclosure. The temperature-measuring circuit may include the excitation power supply VSS, a sampling coil L3, the receiving coil (including an Ls1 and an Ls2), the excitation coil LX2, a resonance capacitor CX2, the power tube Q1, and the diode D2.

In some embodiments, the excitation coil LX2 is connected to the resonance capacitor CX2 in parallel.

As shown in FIG. 6, FIG. 6 is a schematic circuit diagram of the temperature-measuring circuit according to a second embodiment of the present disclosure. The temperature-measuring circuit includes the excitation power supply VSS, the sampling coil L3, the receiving coil (including the Ls1 and the Ls2), the excitation coil LX2, the resonance capacitor CX2, the power tube Q1, and the diode D2.

In some embodiments, the excitation coil LX2 may be connected to the resonance capacitor CX2 in series.

A principle of the temperature detection will be described in the following.

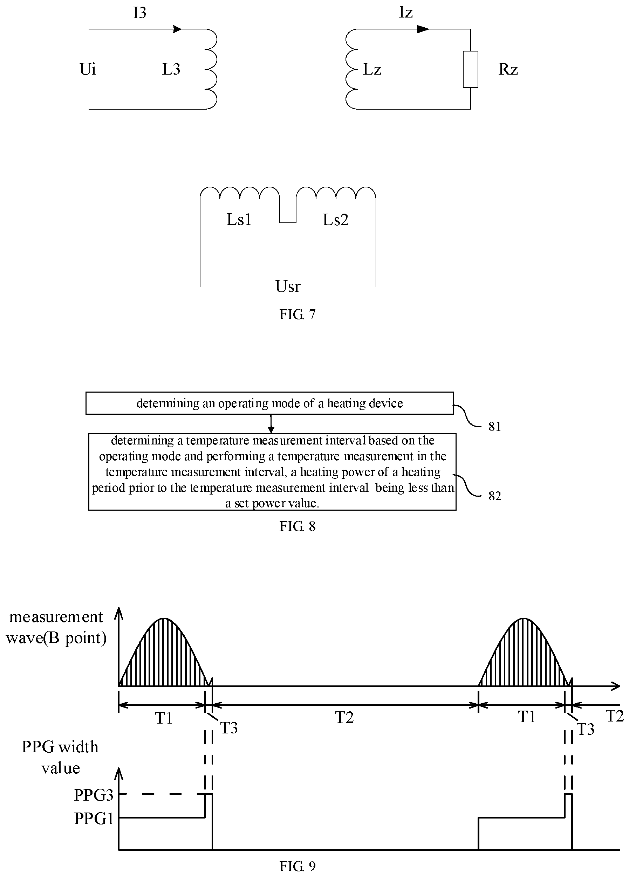

When the excitation coil is moved to the metal object (for example, a metal), a surface of the metal object is subjected to the alternating magnetic field and the eddy current may be generated. In this case, an equivalent circuit for generating the eddy current by the excitation coil is shown in FIG. 7, FIG. 7 shows an equivalent circuit diagram of the excitation coil, an equivalent circuit diagram of the receiving coil, and an equivalent circuit diagram of the metal object according to some embodiments of the present disclosure. Rz is an equivalent resistance of the metal object, and Lz is an equivalent inductance of the metal object. The eddy current may be presented as Iz=I3·jωM/(Rz+ j ω Lz). Herein, M is a mutual inductance between the excitation coil and the metal object.

When the temperature varies, the Lz may substantially remain unchanged, while Rz=f(t) may change as the temperature. A phase difference between the Iz and the I3 is Δφ= ∠z- ∠I3=π/2-arctan(ω Lz/Rz)=arctan (Rz/ω Lz). The phase difference may vary as the temperature.

In order to accurately measure the eddy current Iz, in an embodiment, a pair of differential coils are adopted to receive signals. The pair of differential coils include a first differential coil and a second different coil. The Ls1 is a self-inductance of the first differential coil, and the Ls2 is a self-inductance of the second differential coil. Ms1 is a mutual inductance between the first differential coil and the excitation coil after the metal object is removed, and Ms2 is a mutual inductance between the second differential coil and the excitation coil after the metal object is removed. Mz1 is a mutual inductance between the first differential coil and the metal object, and Mz2 is a mutual inductance between the second differential coil and the metal object. In the present embodiment, it is required that Ms1=Ms2, while Mz1 ≠Mz2. A signal between another pair of dotted terminals respectively of the first differential coil and the second differential coil is taken as the receiving signal Usr. Since an induced voltage generated by the excitation coil on the first differential coil and an induced voltage generated by the excitation coil on the second differential coil may cancel each other out, which may not influence a signal on a differential receiving coil induced by the eddy current on the metal object. An open-circuit output voltage of the differential receiving coil (that is, the receiving signal Usr) is Usr=Iz·j ω(Mz1-Mz2) =I3j·ω M·j ω(Mz1-Mz2)/(Rz+j ω Lz).

Therefore, a temperature value of the metal object may be obtained as long as a phase difference between the Usr and the I3 is measured. Therefore, a measurement process of the present embodiment may include (1) outputting a sine waveform or a square waveform with a fixed frequency on the excitation coil; (2) measuring the phase difference between the receiving signal Usr and a fundamental current of the excitation coil; and (3) acquiring a temperature of a conductor under measuring based on the phase difference.

During the temperature measurement, both a power of the heating coil and electric charges stored in a capacitor may have an impact on the temperature measurement result. A method for the temperature measurement may be described in the following through several embodiments.

As shown in FIG. 8, FIG. 8 is a schematic flowchart of a temperature measurement method based on the heating and temperature-measuring circuit according to an embodiment of the present disclosure. The method includes an operation 81.

In the operation 81: determining an operating mode of the heating and temperature-measuring circuit.

Understandably, in addition to the operating mode, the heating device may further include a standby mode, under which the temperature measurement will not be performed.

In some embodiments, the operating modes of the heating device may include the standby mode or a calibration mode, and a heating mode. In the standby mode or the calibration mode, generally two states may exist. A first state is to perform the temperature measurement during a standby. A second state is to calibrate the heating device during the standby and generally not to perform a heating. The heating mode may include heating in a high power, heating in a low power, and power regulation heating. In some embodiments, the heating in the high power may refer to the heating in a heating power greater than or equal to 1400W. The heating in the low power may refer to the heating in the heating power less than 1400W. The power regulation heating may refer to adjusting the heating power during the heating, an entire interval of which may at least include a heating interval and a heating-stopped interval. It can be understood that 1400W in the present embodiment may be set based on parameters of specific electronic components of the heating and temperature-measuring circuit.

The method further includes an operation 82.

In the operation 82: determining a temperature measurement interval based on the operating mode and performing a temperature measurement in the temperature measurement interval, a heating power of a heating period prior to the temperature measurement interval being less than a set power value.

In some embodiments, in response to the operating mode being the standby mode or the calibration mode, the temperature measurement interval may be determined based on the standby mode or the calibration mode, and the temperature measurement may be further performed in the temperature measurement interval. In response to the operating mode being the heating mode, a heating type may be determined, the temperature measurement interval may be determined based on the heating type, and the temperature measurement may be performed in the temperature measurement interval.

In the standby mode or the calibration mode, the method includes the following.

In response to the operating mode being the standby mode or the calibration mode, at least one of the heating periods may be initiated, and the temperature measurement may be performed at or at a moment near an end of the at least one of the heating periods.

As shown in FIG. 9, FIG. 9 is a waveform diagram of a standby mode or a calibration mode. A purpose of the at least one of the heating periods T1 being initiated in the standby mode or the calibration mode may be to discharge a capacitance stored in the capacitor filter C1.

Understandably, when a voltage provided by the input power supply is 220V, after the heating is stopped, a voltage of the filter capacitor C1 is 310V (220V*1.414). Since the voltage of the C1 is not reduced to a value less than a voltage value of the VSS, the temperature measurement result may be affected. Therefore, when the temperature measurement is performed in the standby mode or the calibration mode, the at least one of the heating periods is initiated first to discharge the C1. Then the temperature measurement is performed at the end of the at least one of the heating periods or at a moment near the end of the at least one of the heating periods.

In some embodiments, the moment near the end of the at least one of the heating periods is a set time point prior to the end of the at least one of the heating periods. The time point is determined by a pulse width value of the PPG. The larger the pulse width value of the PPG, the wider the temperature measurement interval. In some embodiments, a center of the PPG width is located at a zero point of the end of the at least one of the heating periods.

In some embodiments, PPG1 < PPG3. Herein, PPG1 is a pulse width value of a driving pulse signal of the heating period, and PPG3 is a pulse width value of the driving pulse signal of the temperature measurement interval.

During the heating in the high power, the method includes the following.

In response to the heating type being the type of the heating in the high power, the heating power of at least one of the plurality of the heating periods is reduced, the heating in the low power is performed in the at least one of the plurality of the heating periods, and the temperature measurement is performed at a moment near an end of any one of target heating periods of the plurality of the heating periods.

In an embodiment, only the heating power of one heating period of the plurality of the heating periods may be reduced, the one heating period may be taken as a target heating period, and the temperature measurement may be performed at a moment near an end of the target heating period. Specifically, a last one of a preset number of consecutive heating periods may be taken as the target heating period. The heating power of the target heating period may be reduced, and the temperature measurement may be performed at the moment near the end of the target heating period.

In another embodiment, heating powers of multiple heating periods in the plurality of the heating periods may be reduced. Any one of the multiple heating periods with the heating powers being reduced may be taken as the target heating period. The temperature measurement may be performed at the moment near the end of the target heating period.

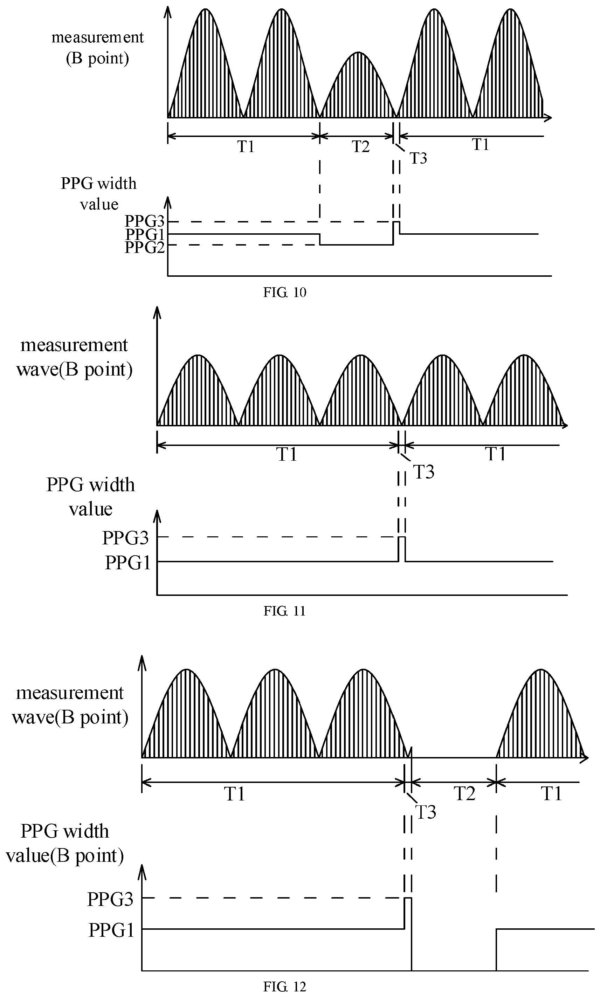

As shown in FIG. 10, FIG. 10 is a waveform diagram of the heating in the high power. It is understandable that a local heating is relatively serious during the heating in the high power due to the metal object being heated by the eddy current. For a factor of the specific heat capacity, an actual temperature of the metal object may be not truly reflected during the temperature measurement, which may lead to a problem of the measured temperature being inaccurate.

During the heating in the high power, the entire interval may be divided into T1, T2, and T3. T1 is a high-power heating interval, T2 is a low-power heating interval, and T3 is a measurement interval.

In some embodiments, a number N may be preset, a heating power of a last one of N heating periods may be reduced, and the temperature measurement may be performed at a moment near an end of the last one of the N heating periods. In other embodiments, time parameters T1, T2, and T3 may be preset (which may be set based on a frequency of an alternating current). The heating in the high power may be performed in the high-power heating interval T1, the heating in the low power may be performed in the low-power heating interval T2, and the temperature measurement may be performed in the measurement interval T3, which may be performed in a cycle.

In a specific embodiment, a last one of every three of the consecutive heating periods may be taken as the target heating period, and the heating power of the target heating period may be reduced. That is, the entire interval may be set in an order of "two high-power heating intervals, one low-power heating interval, one measurement interval", and cycled as this order.

In the present embodiment, PPG2<PPG1<PPG3. PPG1 is a pulse width value of the driving pulse signal of the heating period in the high power, PPG2 is a pulse width value of the driving pulse signal of the heating period in the low power, and PPG3 is the pulse width value of the driving pulse signal of the temperature measurement interval. In a specific embodiment, PPG2≤0.8*PPG1.

In other embodiments, at least two target heating periods may be set. That is, the heating powers of at least two later heating periods in multiple of the consecutive heating periods may be reduced. In an embodiment, the frequency of the alternating current may be 50Hz, and T2≥10ms.

During the heating in the low power, the method includes the following.

In response to the heating type being the type of the heating in the low power, the temperature measurement is performed at a moment near an end of a last one of a preset number of the heating periods.

As shown in FIG. 11, FIG. 11 is a waveform diagram of a heating in a low power. It is understandable that although the specific heat capacity has a less influence on the heating in the low power, the pulse width value of the PPG may be required to be increased during the temperature measurement, which may affect the heating. Therefore, in the present disclosure, the temperature measurement may be performed one time in the plurality of heating periods.

During the heating in the low power, the entire interval may be divided into T1 and T3. T1 is the low-power heating interval, and T3 is the measurement interval.

In some embodiments, the number N may be preset, the temperature measurement may be performed at the moment near the end of the last one of the N heating periods. In some embodiments, N≥1.

In other embodiments, the time parameters T1 and T3 may also be preset (which may be set based on the frequency of the alternating current). The heating in the low power may be performed in the low-power heating interval T1, and the temperature measurement may be performed in the measurement interval T3, which may be performed in a cycle. In some embodiments, T1 may be set based on the frequency of the alternating current. For example, the frequency may be 50Hz, T1 may be N*10ms, and N≥1.

In a specific embodiment, the temperature measurement may be performed at a moment near an end of the last one of the every three of the consecutive heating periods, which may be repeated.

In the present embodiment, PPG1<PPG3. PPG1 is a pulse width value of the driving pulse signal of the heating period, and PPG3 is the pulse width value of the driving pulse signal of the temperature measurement interval.

During the power regulation heating, the method may include the following.

During the power regulation heating, the entire interval may include the heating interval and the heating-stopped interval. The heating interval may include at least one heating period. In response to the heating type being the type of the power regulation heating, the temperature measurement may be performed at a moment near an end of a last one of the heating periods in the heating interval.

As shown in FIG. 12, FIG. 12 is a waveform diagram of power regulation heating. During the heating in the low power, the entire interval may include T1, T2, and T3. In some embodiments, T1 may be the heating interval, T2 may be the heating-stopped interval, and T3 may be the measurement interval.

In the present embodiment, due to a switch of the heatingpower, the heating-stopped interval may exist during the switching of the power. Therefore, the temperature measurement may be performed at the moment near the end of the last one of the heating periods in the heating interval. In this way, the temperature measurement may be performed without affecting the heating.

In the embodiment, PPG1<PPG3. PPG1 is the pulse width value of the driving pulse signal of the heating period, and PPG3 is the pulse width value of the driving pulse signal of the temperature measurement interval.

In other embodiments, the power regulation heating may also refer to manners of the heating in the high power and the heating in the low power as mentioned above. In response to the heating in the high power being performed before and after the power is regulated, during the temperature measurement, the heating power of the target heating period in the plurality of the heating periods may be reduced, and the heating in the low power may be performed in the target heating period. The temperature measurement may be performed at the moment near the end of the target heating period. In response to the heating in the low power being performed before and after the power is regulated, during the temperature measurement, the temperature measurement may be performed at the moment near the end of the last one of the preset number of heating periods.

Compared to the related art, the temperature measurement method based on the heating and temperature-measuring circuit according to some embodiment of the present disclosure includes: determining an operating mode of the heating device; determining the temperature measurement interval based on the operating mode and performing the temperature measurement in the temperature measurement interval. The heating power of the heating period prior to the temperature measurement interval is less than the set power value. In this way, the different temperature measurement intervals may be determined under the different operating modes, such that at least the heating power before the temperature measurement may be lower, a problem that the temperature measurement result may be affected by the specific heat capacity resulting from the local temperature of the metal object which is heated being over high may not exist, and the accuracy of the temperature measurement may be improved.

Further, during a process of the heating in the low power and a process of the power regulation heating, an influence of the temperature measurement on the heating may be reduced by means of performing the temperature measurement one time in the plurality of the heating periods. In addition, in the standby mode or the calibration mode, the at least one heating period may be initiated to discharge the capacitance, such that a possibility of an influence of the capacitance on the temperature measurement result may be reduced.

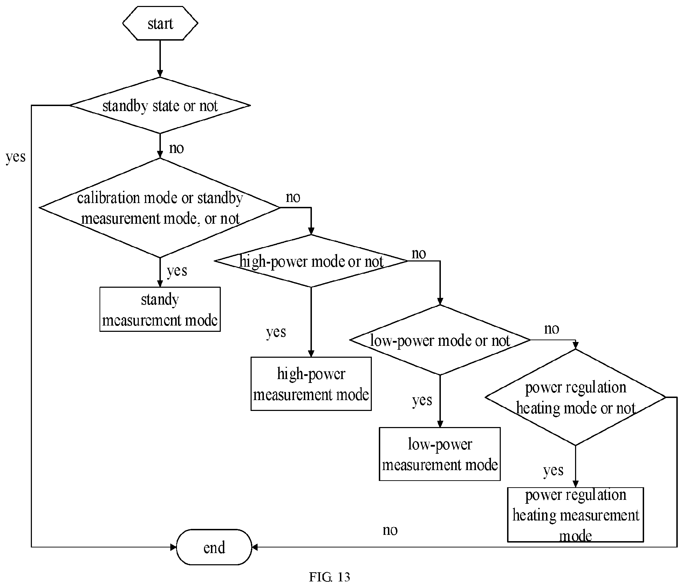

The following description will be made in conjunction with the above implementation manners and FIG. 13. FIG. 13 is a schematic flowchart of a multi-mode determining process according to some embodiments of the present disclosure.

In a first operation: detecting whether a current state is a standby state, performing no operation in response to the current state being the standby state, and detecting whether a current mode is a standby measurement mode in response to the current state being not the standby state.

In a second operation: adopting a manner for the temperature measurement corresponding to the standby measurement mode in response to the current mode being the standby measurement mode, that is, initiating the at least one heating period, performing the temperature measurement at or at a moment near an end of the at least one heating period; and detecting whether the current mode is a high-power mode in response to the current mode being not the standby measurement mode.

In a third operation: adopting a method for the temperature measurement corresponding to the high-power mode in response to the current mode being the high-power mode, that is, reducing the heating power of the target heating period in the plurality of the heating periods in response to the heating type being the type of the heating in the high power, to allow the heating in the low power to be adopted in the target heating period, and performing the temperature measurement at the moment near the end of the target heating period; and detecting whether the current mode is a low-power mode in response to the current mode being not the high-power mode.

In a fourth operation: adopting a method for the temperature measurement corresponding to the low-power mode in response to the current mode being the low-power mode, that is, performing the temperature measurement at the moment near the end of the last one of the preset number of the heating periods in response to the heating type being the type of the heating in the low power; and detecting whether the current mode is the power regulation mode in response to the current mode being not the low-power mode.

In a fifth operation: adopting a method for the temperature measurement corresponding to the power regulation mode in response to the current mode being the power regulation mode, that is, performing the temperature measurement at the moment near the end of the last one of the heating periods in the heating interval in response to the heating type being the type of the power regulation heating; and ending in response to the current mode being not the power regulation mode.

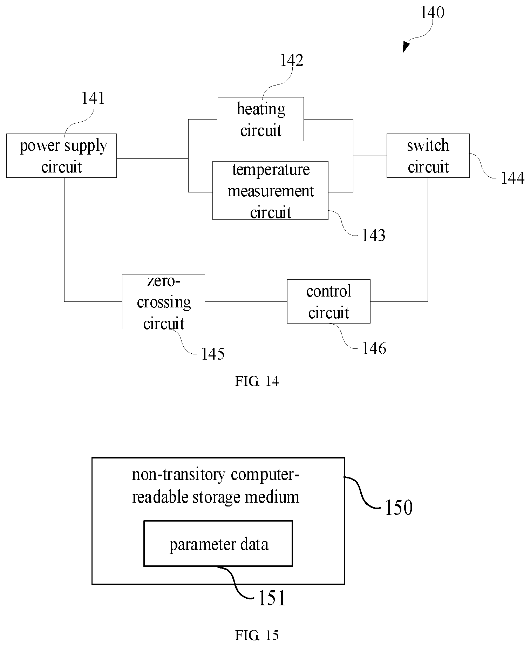

As shown in FIG. 14, FIG. 14 is a module schematic diagram of the heating and temperature-measuring circuit according to some embodiments of the present disclosure. The heating and temperature-measuring circuit 140 may include a power supply circuit 141, a heating circuit 142, a temperature-measuring circuit 143, a switch circuit 144, a zero-crossing circuit 145, and a control circuit 146.

Corresponding to FIG. 4 above, the power supply circuit 141 may include a power input terminal L/N, a fuse F1, a rectifier bridge D1, a choke coil L1, and a filter capacitor C1. The heating circuit 142 may include a resonant capacitor C2 and a resonant inductor L2 (the heating coil). The temperature-measuring circuit 143 may include an excitation power supply VSS, a diode D4, a current transformer L3, and an excitation coil (not shown in FIG. 14). The switch circuit 144 may include a power tube IGBT. The zero-crossing circuit 145 may include a diode D2, a diode D3, a resistor R1, a resistor R2, a resistor R3, a comparator CMP1, and a driving module DR1 for the IGBT. The control circuit 146 may include a control chip IC1.

In the embodiments corresponding to FIG. 4 above, the heating circuit 142 and the temperature-measuring circuit 143 may be combined to and integrated in one heating and temperature-measuring circuit. In other embodiments, the heating circuit 142 and the temperature-measuring circuit 143 may be arranged separately, which will not be repeated herein.

It can be understood that the above method may be stored in a non-transitory storage medium in a form of program data, and may be implemented by the control chip IC1 provided in the embodiments according to FIG. 3. In an embodiment, the control chip IC1 may be a control chip in the cooking apparatus, and the cooking apparatus may be an induction cooker.

As shown in FIG. 15, FIG. 15 is a structural schematic diagram of a non-transitory computer-readable storage medium according to an embodiment of the present disclosure. A non-transitory computer-readable storage medium 150 may be configured to store program data 151. When the program data 151 is executed by a controller, the following method may be implemented.

The controller is caused to determine an operating mode of a heating device; and determine a temperature measurement interval based on the operating mode and perform a temperature measurement in the temperature measurement interval, and to allow or configure a heating power of a heating period prior to the temperature measurement interval to be less than a set power value.

In some embodiments, in response to the heating type being a type of heating in a high power, the controller is caused to reduce the heating power of at least one of the plurality of the heating periods, perform the heating in the low power in the at least one of the plurality of the heating periods, and perform the temperature measurement at a moment near an end of any one of target heating periods of the plurality of the heating periods. The high power is greater than the set power value, the low power is less than the set power value, and the moment near the end of the any one of the target heating periods is a set time point prior to the end of the any one of the target heating periods.

In some embodiments, in response to the heating type being a type of heating in a low power, the controller is caused to perform the temperature measurement at a moment near an end of a last one of a preset number of the heating periods. The low power is less than the set power value, and the moment near the end of the last one of the preset number of the heating periods is a set time point prior to the end of the last one of the preset number of the heating periods.

In some embodiments, the heating type is power regulation heating, an entire interval of the power regulation heating includes a heating interval and a heating-stopped interval, and the heating interval includes at least one heating period. The controller is caused to perform the temperature measurement at a moment near an end of a last one of the heating periods in the heating interval, in response to the heating type being a type of power regulation heating. The moment near the end of the last one of the heating periods in the heating interval is a set time point prior to the end of the last one of the heating periods in the heating interval.

It should be understood that the method and the device disclosed in the several embodiments of the present disclosure may be implemented in other manners. For example, the embodiments of the device described above are simply illustrative. For example, a division for modules or units is only a logical function division. Other division manners may be allowed during an actual implementation. For example, multiple units or components may be combined or integrated to another system. Or some features may be omitted, or not implemented.

Units described as separate components may or may not be physically separated. A component displayed as a unit may or may not be a physical unit, that is, may be located in one place, or may be distributed to multiple network units. Some or all of the units may be selected according to actual needs to achieve solutions in some embodiments of the present disclosure.

In addition, each function unit in each of the embodiments of the present disclosure may be integrated to one processing unit, or each of the units may exist physically alone, or two or more units may be integrated to one unit. An integrated unit mentioned above may be implemented in a form of a hardware, or may be implemented in a form of a software functional unit.

## Claims

1. A temperature measurement method based on a heating and temperature-measuring circuit, the heating and temperature-measuring circuit being configured to heat a metal object (20) via a heating coil (12) by inputting an alternating-current voltage to the heating coil (12), and a heating process comprises a plurality of heating periods, the method comprises
determining (81) an operating mode of the heating and temperature-measuring circuit; and
determining (82) a temperature measurement interval based on the operating mode and performing a temperature measurement in the temperature measurement interval, wherein a heating power of a heating period prior to the temperature measurement interval is less than a set power value;
**characterised in that** the determining a temperature measurement interval based on the operating mode and performing a temperature measurement in the temperature measurement interval, comprises:
in response to the operating mode being a standby mode or a calibration mode, determining the temperature measurement interval based on the standby mode or the calibration mode and performing the temperature measurement in the temperature measurement interval; and
in response to the operating mode being a heating mode, determining a heating type, determining the temperature measurement interval based on the heating type, and performing the temperature measurement in the temperature measurement interval;
wherein the determining the temperature measurement interval based on the standby mode or the calibration mode and performing the temperature measurement in the temperature measurement interval, comprises:
initiating at least one of the heating periods; and
performing the temperature measurement at or at a moment near an end of the at least one of the heating periods;
wherein the determining the temperature measurement interval based on the heating type and performing the temperature measurement in the temperature measurement interval, comprises:
in response to the heating type being a type of heating in a high power, reducing the heating power of at least one of the plurality of the heating periods, performing heating in a low power in the at least one of the plurality of the heating periods, and performing the temperature measurement at a moment near an end of any one of target heating periods of the plurality of the heating periods;
in response to the heating type being a type of heating in a low power, performing the temperature measurement at a moment near an end of a last one of a preset number of the heating periods;
wherein the high power is greater than the set power value, the low power is less than the set power value, and the moment near the end of the last one of the preset number of the heating periods is a set time point prior to the end of the last one of the preset number of the heating periods.

2. The method according to claim 1, wherein the heating coil is connected to a switch circuit, and the switch circuit is controlled by a driving pulse signal to be on or off;
wherein PPG1<PPG3, wherein PPG1 is a pulse width value of the driving pulse signal of the heating period, and PPG3 is a pulse width value of the driving pulse signal of the temperature measurement interval.

3. The method according to claim 1, wherein the reducing the heating power of at least one of the plurality of the heating periods, performing heating in a low power in the at least one of the plurality of the heating periods, and performing the temperature measurement at a moment near an end of any one of target heating periods of the plurality of the heating periods, comprises:
taking a last one of a preset number of consecutive heating periods as a target heating period;
reducing a heating power of the target heating period; and
performing the temperature measurement at a moment near an end of the target heating period.

4. The method according to claim 3, wherein the heating coil is connected to a switch circuit, and the switch circuit is controlled by a driving pulse signal to be on or off;
wherein PPG2<PPG1<PPG3, wherein PPG1 is a pulse width value of the driving pulse signal of a heating period in the high power, PPG2 is a pulse width value of the driving pulse signal of a heating period in the low power, and PPG3 is a pulse width value of the driving pulse signal of the temperature measurement interval.

5. The method according to claim 4, wherein PPG2≤0.8*PPG1.

6. The method according to claim 1, wherein the heating coil is connected to a switch circuit, and the switch circuit is controlled by a driving pulse signal to be on or off;
wherein PPG1<PPG3, wherein PPG1 is a pulse width value of the driving pulse signal of the heating period, and PPG3 is a pulse width value of the driving pulse signal of the temperature measurement interval.

7. The method according to claim 1, wherein the heating type is power regulation heating, an entire interval of the power regulation heating comprises a heating interval and a heating-stopped interval, and the heating interval comprises at least one heating period;
wherein the determining the temperature measurement interval based on the heating type and performing the temperature measurement in the temperature measurement interval comprises performing the temperature measurement at a moment near an end of a last one of the heating periods in the heating interval, in response to the heating type being a type of power regulation heating;
wherein the moment near the end of the last one of the heating periods in the heating interval is a set time point prior to the end of the last one of the heating periods in the heating interval.

8. The method according to claim 7, wherein the heating coil is connected to a switch circuit, and the switch circuit is controlled by a driving pulse signal to be on or off;
wherein PPG1<PPG3, wherein PPG1 is a pulse width value of the driving pulse signal of the heating period, and PPG3 is a pulse width value of the driving pulse signal of the temperature measurement interval.

9. A heating and temperature-measuring circuit (140), comprising:
a heating circuit (142);
a temperature-measuring circuit (143);
a switch circuit (144), connected to the heating circuit (142) and the temperature-measuring circuit (143); and
a control circuit (146), connected to the switch circuit (144) and configured to output a driving pulse signal, and the driving pulse signal is configured to control the switch circuit (144) to be on or off, to implement the method according to any one of claims 1-8.

10. A cooking apparatus (10), the cooking apparatus (10) comprises the heating and temperature-measuring circuit according to claim 9.

11. A non-transitory computer-readable storage medium (150), the computer-readable storage medium (150) is configured to store program data (151), and when the program data (151) is executed by a controller, the controller causes the heating and temperature-measuring circuit according to claim 9 to perform the method according to any one of claims 1-8.

## Patentansprüche

1. Temperaturmessverfahren auf der Basis einer Heiz- und Temperaturmessschaltung, wobei die Heiz- und Temperaturmessschaltung dazu konfiguriert wird, ein Metallobjekt (20) vermittels einer Heizspule (12) durch Anlegen einer Wechselstrom-Spannung an die Heizspule (12) aufzuheizen, und wobei ein Heizprozess eine Mehrzahl von Heizperioden umfasst, wobei das Verfahren Folgendes umfasst:
Bestimmen (81) eines Betriebsmodus der Heiz- und Temperaturmessschaltung; und
Bestimmen (82) eines Temperaturmessintervalls auf der Basis des Betriebsmodus und Durchführen einer Temperaturmessung im Temperaturmessintervall, wobei eine Heizleistung einer Heizperiode vor dem Temperaturmessintervall kleiner als ein eingestellter Leistungswert ist;
**dadurch gekennzeichnet, dass** das Bestimmen eines Temperaturmessintervalls auf der Basis des Betriebsmodus und das Durchführen einer Temperaturmessung im Temperaturmessintervall Folgendes umfasst:
in Antwort darauf, dass der Betriebsmodus ein Standby-Modus oder ein Kalibrationsmodus ist, Bestimmen des Temperaturmessintervalls auf der Basis des Standby-Modus oder des Kalibrationsmodus und Durchführen der Temperaturmessung im Temperaturmessintervall; und
in Antwort darauf, dass der Betriebsmodus ein Heizmodus ist, Bestimmen eines Typs des Heizens, Bestimmen des Temperaturmessintervalls auf der Basis des Typs des Heizens und Durchführen der Temperaturmessung im Temperaturmessintervall;
wobei das Bestimmen des Temperaturmessintervalls auf der Basis des Standby-Modus oder des Kalibrationsmodus und Durchführen der Temperaturmessung im Temperaturmessintervall Folgendes umfasst:
Einleiten mindestens einer der Heizperioden; und
Durchführen der Temperaturmessung an oder zu einem Zeitpunkt nahe einem Ende der mindestens einen der Heizperioden;
wobei das Bestimmen des Temperaturmessintervalls auf der Basis des Typs des Heizens und Durchführen der Temperaturmessung im Temperaturmessintervall Folgendes umfasst:
in Antwort darauf, dass der Typ des Heizens ein Typ des Heizens mit hoher Leistung ist, Reduzieren der Heizleistung von mindestens einer der Mehrzahl von Heizperioden, Durchführen des Heizens mit einer niedrigen Leistung in der mindestens einen der Mehrzahl von Heizperioden, und Durchführen der Temperaturmessung zu einem Zeitpunkt nahe einem Ende irgendeiner von Zielheizperioden aus der Mehrzahl der Heizperioden;
in Antwort darauf, dass der Typ des Heizens ein Typ des Heizens mit niedriger Leistung ist, Durchführen der Temperaturmessung zu einem Zeitpunkt nahe einem Ende einer letzten einer voreingestellten Anzahl der Heizperioden;
wobei die hohe Leistung größer als der eingestellte Leistungswert ist, die niedrige Leistung kleiner als der eingestellte Leistungswert ist, und der Zeitpunkt nahe dem Ende der letzten der voreingestellten Anzahl der Heizperioden ein eingestellter Zeitpunkt vor dem Ende der letzten der voreingestellten Anzahl der Heizperioden ist.

2. Verfahren nach Anspruch 1, wobei die Heizspule mit einer Umschalt-Schaltung verbunden ist und die Umschalt-Schaltung durch ein Treiberpulssignal gesteuert wird, um an oder aus zu sein;
wobei PPG1<PPG3, wobei PPG1 ein Pulsbreitenwert des Treiberpulssignals der Heizperiode ist und PPG3 ein Pulsbreitenwert des Treiberpulssignals des Temperaturmessintervalls ist.

3. Verfahren nach Anspruch 1, wobei das Reduzieren der Heizleistung von mindestens einer der Mehrzahl von Heizperioden, Durchführen des Heizens mit einer niedrigen Leistung in der mindestens einen der Mehrzahl von Heizperioden, und Durchführen der Temperaturmessung zu einem Zeitpunkt nahe einem Ende irgendeiner von Zielheizperioden aus der Mehrzahl der Heizperioden Folgendes umfasst:
Annehmen einer letzten einer voreingestellten Anzahl von aufeinander folgenden Heizperioden als eine Zielheizperiode;
Reduzieren einer Heizleistung der Zielheizperiode; und
Durchführen der Temperaturmessung zu einem Zeitpunkt nahe einem Ende der Zielheizperiode.

4. Verfahren nach Anspruch 3, wobei die Heizspule mit einer Umschalt-Schaltung verbunden ist und die Umschalt-Schaltung durch ein Treiberpulssignal gesteuert wird, um an oder aus zu sein;
wobei PPG2<PPG1<PPG3, wobei PPG1 ein Pulsbreitenwert des Treiberpulssignals einer Heizperiode mit hoher Leistung ist, PPG2 ein Pulsbreitenwert des Treiberpulssignals einer Heizperiode mit niedriger Leistung ist, und PPG3 ein Pulsbreitenwert des Treiberpulssignals des Temperaturmessintervalls ist.

5. Verfahren nach Anspruch 4, wobei PPG2≤0.8*PPG1.

6. Verfahren nach Anspruch 1, wobei die Heizspule mit einer Umschalt-Schaltung verbunden ist und die Umschalt-Schaltung durch ein Treiberpulssignal gesteuert wird, um an oder aus zu sein;
wobei PPG1<PPG3, wobei PPG1 ein Pulsbreitenwert des Treiberpulssignals der Heizperiode ist und PPG3 ein Pulsbreitenwert des Treiberpulssignals des Temperaturmessintervalls ist.

7. Verfahren nach Anspruch 1, wobei der Typ des Heizens leistungsgesteuertes Heizen ist, ein vollständiges Intervall vom leistungsgesteuerten Heizen ein Heizintervall und ein Heizung-gestoppt-Intervall umfasst, und das Heizintervall mindestens eine Heizperiode umfasst;
wobei das Bestimmen des Temperaturmessintervalls auf der Basis des Typs von Heizung und Durchführen der Temperaturmessung im Temperaturmessintervall Durchführen der Temperaturmessung zu einem Zeitpunkt nahe einem Ende einer letzten der Heizperioden im Heizintervall umfasst in Antwort darauf, dass der Typ von Heizung ein Typ von leistungsgesteuertem Heizen ist:
wobei der Zeitpunkt nahe dem Ende der letzten der Heizperioden im Heizintervall ein eingestellter Zeitpunkt vor dem Ende der letzten der Heizperioden im Heizintervall ist.

8. Verfahren nach Anspruch 7, wobei die Heizspule mit einer Umschalt-Schaltung verbunden ist und die Umschalt-Schaltung durch ein Treiberpulssignal gesteuert wird, um an oder aus zu sein;
wobei PPG1<PPG3, wobei PPG1 ein Pulsbreitenwert des Treiberpulssignals der Heizperiode ist und PPG3 ein Pulsbreitenwert des Treiberpulssignals des Temperaturmessintervalls ist.

9. Heiz- und Temperaturmessschaltung (140), umfassend:
eine Heizschaltung (142);
eine Temperaturmessschaltung (143);
eine Umschalt-Schaltung (144) verbunden mit der Heizschaltung (142) und der Temperaturmessschaltung (143); und
eine Steuerschaltung (146) verbunden mit der Umschalt-Schaltung (144) und konfiguriert zum Ausgeben eines Treiberpulssignals, wobei das Treiberpulssignal konfiguriert ist, die Umschalt-Schaltung (144) zu steuern, an oder aus zu sein, um das Verfahren nach einem der Ansprüche 1-8 zu implementieren.

10. Kochvorrichtung (10), wobei die Kochvorrichtung (10) die Heiz- und Temperaturmessschaltung nach Anspruch 9 umfasst.

11. Nicht-transitorisches computerlesbares Speichermedium (150), wobei das computerlesbare Speichermedium (150) zum Speichern von Programmdaten (151) konfiguriert ist, und wobei bei Ausführung der Programmdaten (151) durch eine Steuerung die Steuerung die Heiz- und Temperaturmessschaltung nach Anspruch 9 veranlasst, das Verfahren nach einem der Ansprüche 1-8 durchzuführen.

## Revendications

1. Procédé de mesure de température basé sur un circuit de chauffage et de mesure de température, le circuit de chauffage et de mesure de température étant configuré pour chauffer un objet métallique (20) via une bobine chauffante (12) en appliquant une tension de courant alternatif à la bobine chauffante (12), et un procédé de chauffage comprend une pluralité de périodes de chauffage, le procédé comprend :
la détermination (81) d'un mode de fonctionnement du circuit de chauffage et de mesure de température ; et
la détermination (82) d'un intervalle de mesure de température sur la base du mode de fonctionnement et la réalisation d'une mesure de température dans l'intervalle de mesure de température, dans lequel une puissance de chauffage d'une période de chauffage antérieure à l'intervalle de mesure de température est inférieure à une valeur de puissance de consigne ;
**caractérisé en ce que** la détermination d'un intervalle de mesure de température sur la base du mode de fonctionnement et la réalisation d'une mesure de température dans l'intervalle de mesure de température comprennent :
en réponse au fait que le mode de fonctionnement est un mode de veille ou un mode d'étalonnage, la détermination de l'intervalle de mesure de température sur la base du mode de veille ou du mode d'étalonnage et la réalisation de la mesure de température dans l'intervalle de mesure de température ; et
en réponse au fait que le mode de fonctionnement est un mode de chauffage, la détermination d'un type de chauffage, la détermination de l'intervalle de mesure de température sur la base du type de chauffage et la réalisation de la mesure de température dans l'intervalle de mesure de température ;
dans lequel la détermination de l'intervalle de mesure de température sur la base du mode de veille ou du mode d'étalonnage et la réalisation de la mesure de température dans l'intervalle de mesure de température comprennent :
le lancement d'au moins une des périodes de chauffage ; et
la réalisation de la mesure de température à une fin ou à un moment proche d'une fin de l'au moins une période de chauffage ;
dans lequel la détermination de l'intervalle de mesure de température sur la base du type de chauffage et la réalisation de la mesure de température dans l'intervalle de mesure de température comprennent :
en réponse au fait que le type de chauffage est un type de chauffage de haute puissance, la réduction de la puissance de chauffage d'au moins une de la pluralité de périodes de chauffage, la réalisation d'un chauffage de faible puissance dans l'au moins une de la pluralité de périodes de chauffage et la réalisation de la mesure de température à un moment proche d'une fin de l'une quelconque de périodes de chauffage cibles de la pluralité de périodes de chauffage ;
en réponse au fait que le type de chauffage est un type de chauffage de faible puissance, la réalisation de la mesure de température à un moment proche d'une fin d'au moins une d'un nombre prédéfini des périodes de chauffage ;
dans lequel la haute puissance est supérieure à la valeur de puissance de consigne, la puissance faible est inférieure à la valeur de puissance de consigne, et le moment proche de la fin de la dernière du nombre prédéfini de périodes de chauffage est un point de temps de consigne avant la fin de la dernière du nombre prédéfini de périodes de chauffage.

2. Procédé selon la revendication 1, dans lequel la bobine de chauffage est connectée à un circuit de commutation, et l'activation ou la désactivation du circuit de commutation est commandée par un signal d'impulsion d'entraînement ;
dans lequel PPG1<PPG3, dans lequel PPG1 est une valeur de largeur d'impulsion du signal d'impulsion d'entraînement de la période de chauffage, et PPG3 est une valeur de largeur d'impulsion du signal d'impulsion d'entraînement de l'intervalle de mesure de température.

3. Procédé selon la revendication 1, dans lequel la réduction de la puissance de chauffage d'au moins une de la pluralité de périodes de chauffage, la réalisation d'un chauffage de faible puissance dans l'au moins une de la pluralité de périodes de chauffage et la réalisation de la mesure de température à un moment proche d'une fin de l'une quelconque de périodes de chauffage cibles de la pluralité de périodes de chauffage, comprend :
la considération d'une dernière période d'un nombre prédéfini de périodes de chauffage consécutives comme période de chauffage cible ;
la réduction d'une puissance de chauffage de la période de chauffage cible ; et
la réalisation de la mesure de température à un moment proche d'une fin de la période de chauffage cible.

4. Procédé selon la revendication 3, dans lequel la bobine de chauffage est connectée à un circuit de commutation, et l'activation ou la désactivation du circuit de commutation est commandée par un signal d'impulsion d'entraînement ;
dans lequel PPG2<PPG1<PPG3, dans lequel PPG1 est une valeur de largeur d'impulsion du signal d'impulsion d'entraînement d'une période de chauffage de haute puissance, PPG2 est une valeur de largeur d'impulsion du signal d'impulsion d'entraînement d'une période de chauffage de faible puissance, et PPG3 est une valeur de largeur d'impulsion du signal d'impulsion d'entraînement de l'intervalle de mesure de température.

5. Procédé selon la revendication 4, dans lequel PPG2≤0,8*PPG1.

6. Procédé selon la revendication 1, dans lequel la bobine de chauffage est connectée à un circuit de commutation, et l'activation ou la désactivation du circuit de commutation est commandée par un signal d'impulsion d'entraînement ;
dans lequel PPG1<PPG3, dans lequel PPG1 est une valeur de largeur d'impulsion du signal d'impulsion d'entraînement de la période de chauffage, et PPG3 est une valeur de largeur d'impulsion du signal d'impulsion d'entraînement de l'intervalle de mesure de température.

7. Procédé selon la revendication 1, dans lequel le type de chauffage est un chauffage à régulation de puissance, un intervalle entier du chauffage à régulation de puissance comprend un intervalle de chauffage et un intervalle d'arrêt de chauffage, et l'intervalle de chauffage comprend au moins une période de chauffage ;
dans lequel la détermination de l'intervalle de mesure de température sur la base du type de chauffage et la réalisation de la mesure de température dans l'intervalle de mesure de température comprennent la réalisation de la mesure de température à un moment proche d'une fin d'une dernière des périodes de chauffage dans l'intervalle de chauffage, en réponse au fait que le type de chauffage est un type de chauffage à régulation de puissance ;
dans lequel le moment proche de la fin de la dernière des périodes de chauffage dans l'intervalle de chauffage est un point de temps de consigne avant la fin de la dernière des périodes de chauffage dans l'intervalle de chauffage.

8. Procédé selon la revendication 7, dans lequel la bobine de chauffage est connectée à un circuit de commutation, et l'activation ou la désactivation du circuit de commutation est commandée par un signal d'impulsion d'entraînement ;
dans lequel PPG1<PPG3, dans lequel PPG1 est une valeur de largeur d'impulsion du signal d'impulsion d'entraînement de la période de chauffage, et PPG3 est une valeur de largeur d'impulsion du signal d'impulsion d'entraînement de l'intervalle de mesure de température.

9. Circuit de chauffage et de mesure de température (140), comprenant :
un circuit de chauffage (142) ;
un circuit de mesure de température (143) ;
un circuit de commutation (144), connecté au circuit de chauffage (142) et au circuit de mesure de température (143) ; et
un circuit de commande (146), connecté au circuit de commutation (144) et configuré pour délivrer un signal d'impulsion d'entraînement, et le signal d'impulsion d'entraînement est configuré pour commander l'activation ou la désactivation du circuit de commutation (144), afin de mettre en œuvre le procédé selon l'une quelconque des revendications 1 à 8.

10. Appareil de cuisson (10), l'appareil de cuisson (10) comprend le circuit de chauffage et de mesure de température selon la revendication 9.

11. Support de stockage lisible par ordinateur non transitoire (150), le support de stockage lisible par ordinateur (150) est configuré pour stocker des données de programme (151), et lorsque les données de programme (151) sont exécutées par un contrôleur, le contrôleur amène le circuit de chauffage et de mesure de température selon la revendication 9 à réaliser le procédé selon l'une quelconque des revendications 1 à 8.
